**Europäisches Patentamt**

**European Patent Office**

**Office européen des brevets**

(19)

(11) Veröffentlichungsnummer: **0 029 207**
**A1**

(12)

# EUROPÄISCHE PATENTANMELDUNG

(21) Anmeldenummer: **80106970.9**

(22) Anmeldetag: **12.11.80**

(51) Int. Cl.³: **B 60 S 9/12,** B 60 P 1/64

(30) Priorität: **17.11.79 DE 2946554**

(43) Veröffentlichungstag der Anmeldung: **27.05.81**
**Patentblatt 81/21**

(84) Benannte Vertragsstaaten: **AT BE CH FR GB IT LI LU NL SE**

(71) Anmelder: **Klaus, Kaspar, Dr.-Berndl-Strasse 5, D-8940 Memmingen (DE)**

(72) Erfinder: **Klaus, Kaspar, Dr.-Berndl-Strasse 5, D-8940 Memmingen (DE)**

(74) Vertreter: **Pfister, Helmut, Dipl.-Ing., Buxacher Strasse 9, D-8940 Memmingen/Bayern (DE)**

(54) **Stützfuss für Strassenfahrzeuge mit einem Ladegerät.**

(57) Der Stützfuss (1) soll bei Strassenfahrzeugen mit Ladegeräten beim Ladevorgang eine zusätzliche Abstützung ergeben. In der Transportstellung ist der Stützfuss (1) im wesentlichen horizontal und parallel zu einer Radachse (9) angeordnet. Nahe der Abstützseite (3) ist ein Schwenkgelenk (2) vorgesehen, das sich in der Transportstellung unter dem Stützfuss (1) befindet, so dass sich beim Schwenkvorgang der teleskopartig verlängerbare Stützfuss (1) in den Raum seitlich des Fahrzeuges verschwenken lässt. Hierdurch kann je nach den Gegebenheiten die günstigste Abstützstelle am Erdboden ausgewählt werden.

Patentanwalt

## Dipl.-Ing. HELMUT PFISTER

Postscheckkonto München Nr. 1343 39-805
Bankkonto: Bayerische Vereinsbank Memmingen

D-894 MEMMINGEN/BAYERN
Buxacherstraße 9
Telefon (08331) 31 83

0029207

21/1

**12. Nov. 1980**

Herrn Ingenieur Kaspar Klaus, Dr.-Berndl-Str. 5
8940 Memmingen

## Stützfuß für Straßenfahrzeuge mit einem Ladegerät

Die Erfindung betrifft einen Stützfuß für Straßenfahrzeuge mit einem Ladegerät, wobei der Stützfuß in der Transportstellung im wesentlichen horizontal und parallel zu einer Radachse angeordnet ist und in der Betriebsstellung teleskopartig verlängert seitlich vom Fahrzeug absteht und mit seinem Ende um ein Gelenk auf den Erdboden herabschwenkbar ist.

– 2 –

Ein Stützfuß für ein Straßenfahrzeug mit einem Ladegerät hat die Aufgabe, den Fahrzeugrahmen während des Ladevorganges so zu fixieren, daß der Ladevorgang durch die Federung des Fahrzeuges nicht nachteilig beeinflußt wird. In der Regel wird der Stützfuß in unmittelbarer Nähe des Ladegerätes angeordnet, sodaß die Kräfte, die im Ladegerät entstehen, direkt über den Stützfuß abgeleitet werden und nicht den Fahrzeugrahmen belasten.

Sind am Straßenfahrzeug zwei Ladegeräte vorgesehen, insbesondere vor und hinter der Last, um einen Container oder dergleichen auf- oder abladen zu können, ist jedem Ladegerät ein Stützfuß zuzuordnen.

Ein Stützfuß sollte in der Transportstellung möglichst wenig Platz beanspruchen, in der Arbeitsstellung jedoch eine stabile Unterstützung des Fahrzeugrahmens ergeben. Insbesondere ist es aber wichtig, daß mittels des Stützfußes die jeweiligen Abstützstellen seitlich des Fahrzeuges frei wählbar sind, da häufig Hindernissen oder ungeeigneten Abstützstellen am Erdboden ausgewichen werden muß. Auch ist die Höhenlage der einzelnen Abstützstellen unterschiedlich, was bei der Stützfußkonstruktion zu berücksichtigen ist.

Eine besondere Schwierigkeit bei einem Stützfuß ergibt sich dadurch, daß oft ein Stützfuß nicht direkt nach unten abgesenkt werden kann. Beispielsweise gilt dies bei einem Stützfuß, der bei einem Lastfahrzeug oder einem Sattelauflieger am vorderen Ende der Ladefläche angeordnet ist. Einer solchen Bewegung stehen Fahrzeugteile im Wege.

Es ist ein Stützfuß der eingangs beschriebenen Art bekannt, der teleskopartig verlängerbar ist. Aus der Transportstellung heraus läßt sich dabei der Stützfuß in Richtung der Abstützseite so verlängern, daß verschiedene Abstützpunkte neben dem Fahrzeug gefunden werden können.

Beim Absenkvorgang bewegt sich der Stützfuß um ein Gelenk an dem der Abstützseite gegenüberliegenden Ende des Stützfußes, sodaß der Stützfuß in der Betriebsstellung mit dem Erdboden einen sehr spitzen Winkel einschließt. Bei dieser Bauweise ist nachteilig, daß der Stützfuß aus der Transportstellung nach unten abgesenkt wird, also die Gefahr besteht, daß der Stützfuß mit Fahrzeugteilen in Kollision kommt. Auch bereitet die Unterbringung des Antriebszylinders für den Absenkvorgang Schwierigkeiten.

Andere Stützfüße bestehen aus mehreren Lenkern, die es ermöglichen, daß der Stützfuß in der Abstützstellung nach außen greift. In der Betriebsstellung erfordern diese Stützfüße jedoch in vertikaler Richtung viel Platz, der für die Last oder das Ladegerät benötigt wird bzw. die Stützfüße behindern die Zugänglichkeit der Last beispielsweise der Türen bei einem Container.

Es ist ein Ziel der Erfindung, einen Stützfuß der eingangs beschriebenen Bauweise zu schaffen, der bei sehr geringem Platzbedarf in der Transportstellung leicht eine Vielzahl von Abstützstellen neben dem Fahrzeug finden läßt und wobei insbesondere die Sicherheit gegeben ist, daß der Stützfuß in der Betriebsstellung den für die Fahrzeugteile notwendigen Raum freiläßt.

Zur Lösung dieser Aufgabe geht die Erfindung aus von einem Stützfuß der eingangs beschriebenen Art und schlägt vor, daß das Schwenkgelenk des Stützfußes nahe der Abstützseite am Fahrzeug angeordnet ist und sich in der Transportstellung unter dem Stützfuß befindet.

Bei der Erfindung ist der Stützfuß, wie an sich bekannt, horizontal und im wesentlichen parallel zu einer Fahrzeugachse angeordnet. Da sich aber das Schwenkgelenk auf der Fahrzeugseite unter dem Stützfuß befindet, wird in der Betriebsstellung der Stützfuß mit dem Erdboden einen weniger spitzen Winkel einschließen bzw. der Stützfuß kann auch senkrecht gestellt werden. Bei dieser Bewegung schwenkt der Stützfuß nicht im Raum unter der Transportstellung des Stützfußes. Ein derartiger Stützfuß kann daher beispielsweise auch am vorderen Ende eines Sattelaufliegers angeordnet werden.

Der Antriebszylinder zur Bewegung des Stützfußes befindet sich bei der Erfindung vorzugsweise in der Transportstellung des Stützfußes unter dem Stützfuß. Der Platzbedarf des Antriebszylinders ist dabei vergleichsweise gering. Diese Anordnung hat den Vorteil, daß der Antriebszylinder insbesondere während des Transportes gut geschützt ist. Er kann beispielsweise in einer Tasche angeordnet sein, die in der Transportstellung vom Stützfuß abgedeckt wird.

Weiter hat diese Bauweise den Vorteil, daß günstige Hebelarme für die Bewegung des Stützfußes erhalten werden. Im ersten Teil der Stützfußbewegung sind die Hebelarme zwar noch vergleichsweise ungünstig. Dies ist aber ohne Nachteil, da in dieser Stellung nur der Stützfuß bewegt werden muß, jedoch keine Stützkräfte aufgebracht werden müssen.

Andererseits bringt die Schwenklagerung des Stützfußes unter dem Stützfuß, das heißt, in nur geringem Abstand von der Stützfußmittelachse den Vorteil mit sich, daß die auftretenden Kräfte nur an kleinen Hebelarmen wirksam werden.

In der Transportstellung sind der Stützfuß und der Arbeitszylinder vorzugsweise im wesentlichen parallel zueinander ausgerichtet.

Bei der bewährten Ausbildungsform der Erfindung greift der Arbeitszylinder an dem dem Schwenkgelenk gegenüberliegenden Ende am Stützfuß an.

Diese Anordnung wird für günstiger gehalten, als eine an sich ebenfalls mögliche, jedoch weniger zu bevorzugende Anordnung bei der der Arbeitszylinder sich an der, der Abstützseite gegenüberliegenden Seite des Fahrzeuges abstützt und in geringerem Abstand vom Schwenkgelenk am Stützfuß angreift.

In der Zeichnung ist ein Ausführungsbeispiel der Erfindung dargestellt. Es zeigen:

Fig. 1          eine Rückansicht eines Straßenfahrzeuges mit einem Stützfuß gemäß der Erfindung und

Fig. 2          ein anderes Anwendungsbeispiel der Erfindung.

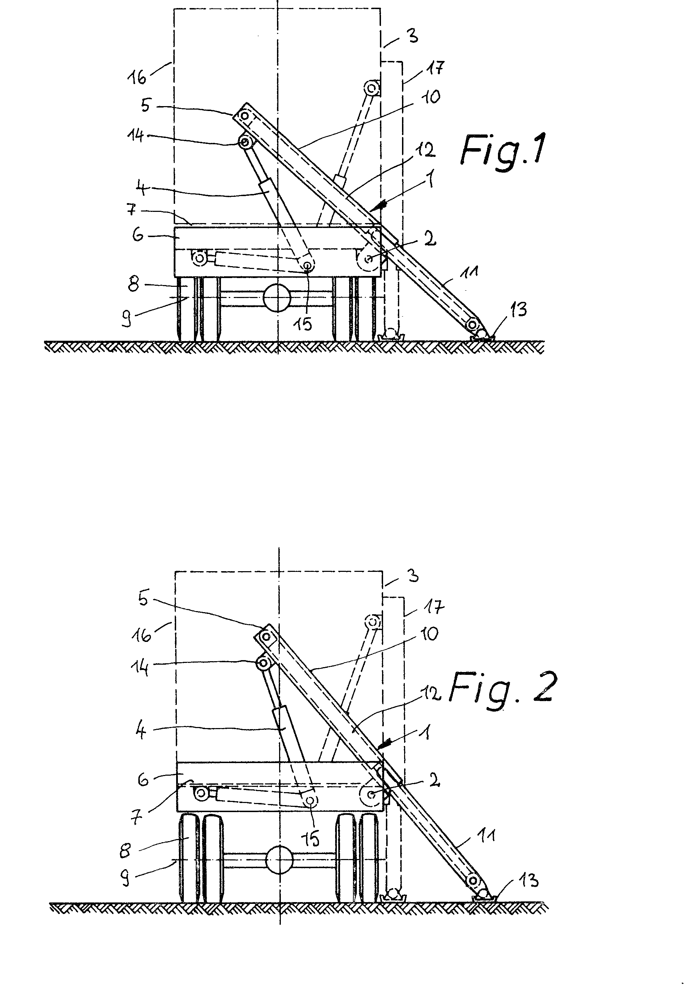

Das Ausführungsbeispiel der Fig. 1 unterscheidet sich vom Ausführungsbeispiel der Fig. 2 im wesentlichen dadurch, daß der Stützfuß 1 im Ausführungsbeispiel der Fig. 1 an einem Gestell 6 gelagert ist, das im Vergleich zum Gestell 6 des Ausführungsbeispiels der Fig. 2 eine niedrigere Höhenlage einnimmt. Beispielsweise kann das Gestell 6, das den Stützfuß trägt und diesen mit dem nicht näher dargestellten Fahrzeugrahmen verbindet, beim Ausführungsbeispiel der Fig. 1 unterhalb der Ladefläche 7 angeordnet werden. Diese Bauweise empfiehlt sich beispielsweise bei der Anordnung eines Stützfußes am Ende eines Lastfahrzeugs.

Die Bauweise nach der Fig. 2 zeigt dagegen ein Gestell 6, das oberhalb der Räder 8 der Fahrzeugachse 9 angeordnet ist.

Im übrigen stimmen die Einzelheiten der Darstellung der Fig. 1 und 2 weitgehend überein. Der Stützfuß 1 kann in beiden Fällen völlig gleichartig ausgebildet werden, wobei ein weiterer Vorteil der Erfindung deutlich wird. Die Erfindung paßt sich gut den jeweiligen unterschiedlichen Verhältnissen an.

0029207

Der Stützfuß 1 besteht im wesentlichen aus einem rohrartigen Hauptteil 10, der teleskopartig den ausfahrbaren Teil 11 aufnimmt. Die Bewegung des Teiles 11 im Teil 10 erfolgt mittels eines besonderen Arbeitszylinders 12 im Inneren des Stützfußes 1. Die Abstützplatte des Stützfußes ist mit 13 bezeichnet.

Der Stützfuß 1 ist um das im Gestell 6 gelagerte Schwenkgelenk 2 beweglich. Für diese Bewegung dient der Arbeitszylinder 4, der in der Nähe des Endes 5 am Stützfuß 1 angreift. Das dort angeordnete Gelenk ist mit 14 bezeichnet.

Der Arbeitszylinder 4 stützt sich ferner im Gelenk 15 am Gestell 6 ab.

In der Transportstellung, von der in der Zeichnung mit gestrichelten Linien 24 die Lage des Zylinders 4 angedeutet ist, befindet sich der Stützfuß 1 in einer horizontalen Lage und erstreckt sich zwischen den beiden Fahrzeugseiten 16 und 3. Dabei ist der Teil 11 eingezogen, wie dies an sich bekannt ist. In der Abstützstellung kann der Stützfuß beispielsweise die mit ausgezogenen Linien dargestellte Stellung einnehmen oder auch die Stellung 17, in der der Stützfuß senkrecht ausgerichtet ist. Es sind auch beliebige Zwischenstellungen möglich.

Patentanwalt

## Dipl.-Ing. HELMUT PFISTER

Postscheckkonto München Nr. 1343 39-805
Bankkonto: Bayerische Vereinsbank Memmingen

D-894 MEMMINGEN/BAYERN
Buxacherstraße 9
Telefon (0 83 31) 31 83

0029207

21/1

1 2. Nov. 1980

Patentansprüche

1. Stützfuß für Straßenfahrzeuge mit Ladegeräten, wobei der Stützfuß in der Transportstellung im wesentlichen horizontal und parallel zu einer Radachse angeordnet ist und in der Betriebsstellung teleskopartig verlängert seitlich vom Fahrzeug absteht und mit seinem Ende um ein Gelenk auf den Erdboden herabschwenkbar ist, dadurch gekennzeichnet,daß das Schwenkgelenk (2) des Stützfußes (1) nahe der Abstützseite (3) am Fahrzeug angeordnet ist und sich in der Transportstellung unter dem Stützfuß befindet.

2. Stützfuß nach Anspruch 1, dadurch gekennzeichnet, daß der Arbeitszylinder zur Bewegung des Stützfußes sich in der Transportstellung des Stützfußes unter dem Stützfuß befindet.

- 2 -

0029207

3. Stützfuß nach einem oder beiden der vorhergehenden Ansprüche, dadurch gekennzeichnet, daß in der Transportstellung der Stützfuß (1) und der Arbeitszylinder (4) im wesentlichen parallel zueinander ausgerichtet sind.

4. Stützfuß nach einem oder mehreren der vorhergehenden Ansprüche, dadurch gekennzeichnet, daß der Arbeitszylinder (4) an dem dem Schwenkgelenk (2) gegenüberliegenden Ende (5) am Stützfuß (1) angreift.

Der Patentanwalt

Fig.1

Fig.2

0029207

0029207

## Europäisches Patentamt

# EUROPÄISCHER RECHERCHENBERICHT

Nummer der Anmeldung

EP 80 10 6970

| Kategorie | EINSCHLÄGIGE DOKUMENTE | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| | FR - A - 2 215 050 (POTAIN) <br> * Ansprüche 1-8; Figur 4 * <br> & DE - A - 2 402 141 <br><br> -- <br><br> FR - A - 2 106 592 (TEWI-PAT) <br> * Ansprüche 1-15; Figuren 3,9 * <br> & DE - A - 2 046 057 <br> & DE - A - 2 141 774 <br><br> -- <br><br> FR - A - 2 182 803 (CLARK) <br> * Ansprüche 1-7; Figuren 3-5 * <br> & DE - A - 2 258 806 <br><br> -- <br><br> DK - A - 139 023 (LYKA) <br> * Anspruch; Figur 3 * <br><br> -- <br><br> DE - A - 2 204 812 (KASPAR) <br> * Ansprüche; Figur 1 * <br><br> ---- | 1 <br><br><br><br><br><br> 1 <br><br><br><br><br><br><br> 1 <br><br><br><br><br><br> 1 <br><br><br><br><br> 1 | B 60 S 9/12 <br> B 60 P 1/64 <br><br><br><br><br><br><br><br><br><br><br><br><br> **RECHERCHIERTE SACHGEBIETE (Int. Cl.³)** <br><br> B 60 S <br> B 60 P |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-02-1981 | SCHMITTER |

EPA form 1503.1   06.78